# EUROPEAN PATENT APPLICATION

(11) **EP 4 207 409 A1**
(43) Date of publication of application: **05.07.2023**
(21) Application number: 22216386.7
(22) Date of filing: 23.12.2022
(51) Int. Cl.: H01M 10/04, H01M 50/531, H01M 50/538, H01M 50/548

(54) **BATTERY**

(30) Priority: 28.12.2021 JP 2021214149
(71) Applicant: Prime Planet Energy & Solutions, Inc., Chuo-ku Tokyo 103-0022 (JP)
(72) Inventor: YAMADA, Tomoyuki, Tokyo, 103-0022 (JP); HOSOKAWA, Takashi, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

A highly reliable battery where multiple tabs and current collecting units are stably connected is provided. In a preferred aspect of the battery disclosed herein, in an electrode body, a first tab and a third tab are arranged such that the middle of the base width of the first tab and the middle of the base width of the third tab are displaced from each other in the perpendicular direction, and a second tab and a fourth tab are arranged such that the middle of the base width of the second tab and the middle of the base width of the fourth tab are displaced from each other in the perpendicular direction.

## Description

### BACKGROUND

The present disclosure relates to a battery.

For example, WO 2021/060010 discloses a battery in which a positive electrode tab group is provided at one end of a wound electrode body in its longitudinal direction, and a negative electrode tab group is provided at the other end. WO 2021/060010 discloses a technology of connecting, to an electrode collecting unit, the tab group with being bent..

### SUMMARY

The wound electrode body such as mentioned above is produced by, for example, winding a positive electrode and a negative electrode each of which includes a long current collecting unit and multiple tabs along the longer side direction of the collecting unit (hereinafter may also be collectively referred to as the "electrode") around a winding core with a separator intervening therebetween and then molding it into a flat shape. In production of the wound electrode body, tabs near the innermost periphery of the wound electrode body may break. When the tabs near the innermost periphery of the wound electrode body breaks, stable connection between the tabs stacked and current collecting units may not be achieved.

An object of the present disclosure is to provide a battery including a wound electrode body with improved performance.

In order to achieve the objective, the present disclosure provides a battery including: a flat wound electrode body including a first electrode, a second electrode having a polarity different from the first electrode, and a separator, the first electrode and the second electrode being wound via the separator; and a battery case housing the wound electrode body, wherein multiple tabs connected to the first electrode protrude from one end of the wound electrode body in the winding axis direction, the tabs are in connection with the first electrode collecting unit, the wound electrode body includes a first region on one side relative to a winding axis and a second region on the other side relative to the winding axis in the thickness direction of the wound electrode body, the tabs include a first tab, a second tab, a third tab, and a fourth tab, among the tabs present in the first region, the first tab is located at a position closest to the winding axis in the thickness direction (on the innermost periphery side), among the tabs present in the second region, the second tab is located at a position closest to the winding axis in the thickness direction (on the innermost periphery side), among the tabs present in the first region, the third tab is located at a position farthest to the winding axis in the thickness direction (on the outermost periphery side), and among the tabs present in the second region, the fourth tab is located at a position farthest to the winding axis in the thickness direction (on the outermost periphery side). At the one end, the first tab and the third tab are arranged such that a middle C 1 of a base width of the first tab and a middle C3 of a base width of the third tab are displaced from each other in a perpendicular direction to the thickness direction, and the second tab and the fourth tab are arranged such that a middle C2 of a base width of the second tab and a middle C4 of a base width of the fourth tab are displaced from each other in the perpendicular direction. With this configuration, it is possible to suitably check whether or not the tabs near the innermost periphery, which are prone to be broken, are actually broken. Further, by selecting and using tabs that are not broken, a highly reliable battery where multiple tabs and current collecting units are stably connected can be obtained. The case where multiple tabs and current collecting units are not stably connected is not preferable in light of the performance and the like of the battery.

In an aspect of the battery disclosed herein, a distance between the middle C1 and the middle C2 in the perpendicular direction to the thickness direction is G1, and a distance between the middle C3 and the middle C4 in the perpendicular direction is G2, and the G1 and the G2 satisfy a relationship G1 > G2.

In an aspect of the battery disclosed herein, a winding beginning end of the first electrode is present in the first region, and in the perpendicular direction, the middle C1 is located farther from the winding axis of the wound electrode body than the middle C2,

In an aspect of the battery disclosed herein, the battery case includes: an exterior body having a bottom wall, a pair of first side walls extending from the bottom wall and facing each other, a pair of second side walls extending from the bottom wall and facing each other, and an opening facing the bottom wall; and a sealing plate sealing the opening, the wound electrode body is arranged such that the winding axis extends along the bottom wall, and the middle C3 and the middle C4 are located closer to the sealing plate than to the winding axis.

In an aspect of the battery disclosed herein, the wound electrode body further includes a fifth tab and a sixth tab in the first electrode, the fifth tab is arranged between the first tab and the third tab in the thickness direction, the sixth tab is arranged between the second tab and the fourth tab in the thickness direction, and at one end of the wound electrode body in the winding axis direction, when a middle of a base width of the fifth tab is a middle C5, a middle of a base width of the sixth tab is a middle C6, and a distance between the middle C5 and the middle C6 in the perpendicular direction is G3, the G1, the G2, and the G3 satisfy a relationship G2 < G3 < G1.

In an aspect of the battery disclosed herein, when a straight line passing through the middle C1 and the middle C3 is a first straight line, and a straight line passing through the middle C2 and the middle C4 is a second straight line, and the first straight line and the second straight line are inclined to the thickness direction.

In an aspect of the battery disclosed herein, in the perpendicular direction, the first straight line and the second straight line do not lie on a straight line.

In an aspect of the battery disclosed herein, the first straight line and the second straight line are inclined toward a same direction in the thickness direction.

In a preferred aspect of the battery disclosed herein, the tabs are in connection with the first electrode collecting unit with being collected, the first tab is closer to the first electrode collecting unit than the third tab, a length of the third tab in a protruding direction is larger than a length of the first tab in the protruding direction, and a length of the fourth tab in the protruding direction is smaller than a length of the second tab in the protruding direction. With this configuration, when the tabs are collected, the tips of the tabs can be suitably aligned, which is preferable.

In an aspect of the battery disclosed herein, the tabs are in connection with the first electrode collecting unit with being collected, the first tab is closer to the first electrode collecting unit than the third tab, at the one end, the base width of the third tab is larger than the base width of the first tab, and the base width of the fourth tab is smaller than the base width of the second tab.

In a preferred aspect of the battery disclosed herein, the tabs are in connection with the first electrode collecting unit with being curved. This configuration allows the battery with high volume energy density to be obtained, which is preferable.

In an aspect of the battery disclosed herein, each of end surfaces in pair of the wound electrode body has a flat portion and a pair of curved portions provided at both ends of the flat portion, and a winding finish end of the first electrode is located near one of the curved portions.

In an aspect of the battery disclosed herein, multiple second electrode tabs connected to the second electrode protrude from the other end of the wound electrode body in the winding axis direction.

In an aspect of the battery disclosed herein, the wound electrode body comprises two wound electrode bodies, the two wound electrode bodies being arranged inside the battery case, values of the G1 of the two wound electrode bodies differ from each other, and/or values of the G2 of the two wound electrode bodies differ from each other.

In an aspect of the battery disclosed herein, the G1 of one of the two wound electrode bodies is larger than the G1 of the other wound electrode body.

In an aspect of the battery disclosed herein, a difference between the G1 of the one wound electrode body and the G1 of the other wound electrode body is larger than a difference between the G2 of the one wound electrode body and the G2 of the other wound electrode body.

In an aspect of the battery disclosed herein, the wound electrode body further comprises a third electrode body which is another wound electrode body, the third electrode body being arranged in the battery case, and G1 of the third electrode body differs from the G1 of the one wound electrode body and the G1 of the other wound electrode body, and/or G2 of the third electrode body differs from the G2 of the one wound electrode body and the G2 of the other wound electrode body.

### BRIEF DESCRIPTION OF THE DRAWINGS

Fig. 1 is a perspective view schematically illustrating a battery according to an embodiment.
Fig. 2 is a schematic longitudinal sectional view taken along line II-II of Fig. 1.
Fig. 3 is a schematic longitudinal sectional view taken along line III-III of Fig. 1.
Fig. 4 is a schematic transverse sectional view taken along line IV-IV of Fig. 1.
Fig. 5 is a perspective view schematically illustrating an electrode body group attached to a sealing plate.
Fig. 6 is a perspective view schematically illustrating an electrode body to which a positive electrode second collecting unit and a negative electrode second collecting unit are attached.
Fig. 7 is a schematic view of a configuration of a wound electrode body according to an embodiment.
Fig. 8A is a schematic view of an end surface on the positive electrode side of the wound electrode body according to an embodiment.
Fig. 8B is a schematic view of an end surface on the positive electrode side of the wound electrode body according to an embodiment.
Fig. 9 is a perspective view schematically showing a sealing plate to which a positive electrode terminal, a negative electrode terminal, a positive electrode first collecting unit, a negative electrode first collecting unit, a positive electrode insulating member, and a negative electrode insulating member have been attached.
Fig. 10 is an inverted perspective view of the sealing plate of Fig. 9.
Fig. 11A is a schematic drawing of a positive electrode (positive electrode sheet) according to an embodiment.
Fig. 11B is a schematic drawing of a negative electrode (negative electrode sheet) according to an embodiment.
Fig. 12 is a schematic drawing illustrating production of a wound body in a battery manufacturing method according to an embodiment.
Fig. 13A is a schematic drawing illustrating molding of a wound body in a battery manufacturing method according to an embodiment.
Fig. 13B is a schematic drawing illustrating molding of a wound body in a battery manufacturing method according to an embodiment.
Fig. 14 is a schematic view of an end surface on a positive electrode side of a wound electrode body according to a second embodiment.
Fig. 15 is a schematic view of an end surface on a positive electrode side of a wound electrode body according to a third embodiment.
Fig. 16 is a schematic view of an end surface on a positive electrode side of a wound electrode body according to a fourth embodiment.
Fig. 17 is a schematic view of an end surface on a positive electrode side of a wound electrode body according to a fifth embodiment.
Fig. 18 is a schematic view of an end surface on a positive electrode side of a wound electrode body according to a sixth embodiment.
Fig. 19 is a schematic view of an end surface on a positive electrode side of a wound electrode body according to a seventh embodiment.

### DETAILED DESCRIPTION

Some preferred embodiments of the technology disclosed herein will be described below with reference to the accompanying drawings. The matters necessary for executing the present disclosure (e.g., the commonly used configuration and manufacturing processes of the battery that do not characterize the present disclosure), except for matters specifically herein referred to can be grasped as design matters of those skilled in the art based on the related art in the preset field. The present disclosure can be executed based on the contents disclosed herein and the technical knowledge in the present field. The following description is not intended to limit the technology disclosed herein to the following embodiments. The expression "A to B" indicating herein a range means A or more to B or less, and also encompasses the meaning of "exceeding A and less than B."

The "battery" herein is a term that indicates all electricity storage devices capable of extracting electric energy, and is a concept that encompasses primary batteries and secondary batteries. The "secondary battery" herein is a term that indicates all electricity storage devices that can be repeatedly charged and discharged, and is a concept that encompasses so-called secondary batteries (chemical batteries) such as a lithium-ion secondary battery and a nickel hydrogen battery and capacitors (physical batteries) such as an electric double layer capacitor.

### <General Configuration of Battery>

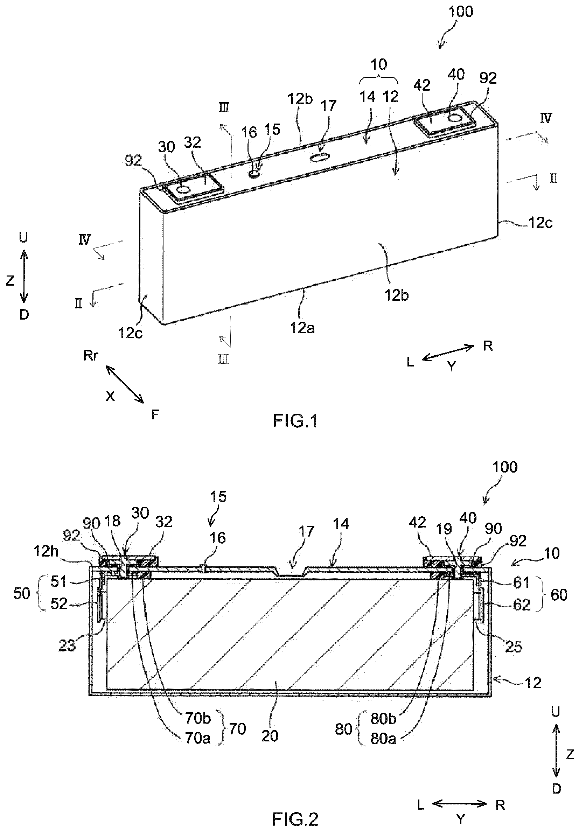

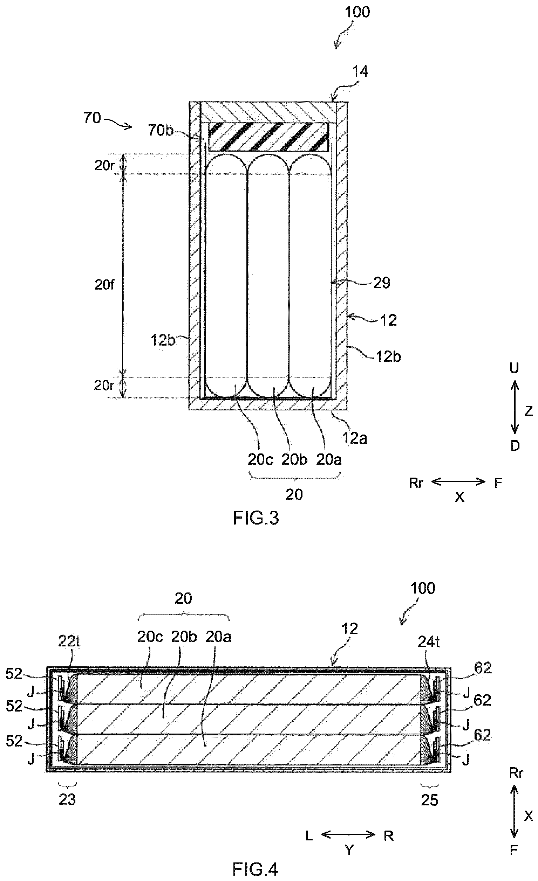

Fig. 1 is a perspective view of the battery 100. Fig. 2 is a schematic longitudinal sectional view taken along line II-II of Fig. 1. Fig. 3 is a schematic longitudinal sectional view taken along line III-III of Fig. 1. Fig. 4 is a schematic transverse sectional view taken along line IV-IV of Fig. 1. In the following description, the reference signs L, R, F, Rr, U, and D in the drawings represent left, right, front, rear, top, and bottom, and the signs X, Y, and Z in the drawings represent the short side direction, long side direction orthogonal to the short side direction, and up-down direction of battery 100, respectively. Such directions are defined for convenience of explanation and are not intended to limit the installation configuration of the battery 100.

As shown in Fig. 2, the battery 100 includes a battery case 10 and an electrode body group 20. The battery 100 according to the present embodiment includes, in addition to the battery case 10 and the electrode body group 20, a positive electrode terminal 30, a positive electrode external electroconductive member 32, a negative electrode terminal 40, a negative electrode external electroconductive member 42, an external insulating member 92, a positive electrode collecting unit 50, a negative electrode collecting unit 60, a positive electrode internal insulating member 70, and a negative electrode internal insulating member 80. Although not shown in the drawings, the battery 100 according to the present embodiment further includes an electrolyte. The battery 100 herein is a lithium-ion secondary battery. The battery 100 has an internal resistance of, for example, about 0.2 mΩ to about 2.0 mΩ.

The battery case 10 is a housing for housing the electrode body group 20. The battery case 10 herein has a flat, bottomed rectangular (square) outside shape. The material of the battery case 10 may be the same as commonly used material without particular limitations. The battery case 10 is made of preferably metal having a predetermined strength. Specifically, the metal for use in the battery case 10 suitably has a tensile strength of about 50 N/mm² to about 200 N/mm². The metal for use in the battery case 10 suitably has a physical property value (rigidity modulus) of about 20 GPa to about 100 GPa. Examples of this type of metal material include aluminum, an aluminum alloy, iron, and an iron alloy.

The battery case 10 includes an exterior body 12, a sealing plate 14, and a gas discharge valve 17. The exterior body 12 is a flat, square (hexahedral) container having a side with an opening 12h. Specifically, as shown in Fig. 1, the exterior body 12 has a substantially rectangular bottom wall 12a, a pair of first side walls 12b extending upward U from the respective shorter sides of the bottom wall 12a and facing each other, and a pair of second side walls 12c extending upward U from the respective longer sides of the bottom wall 12a and facing each other. The area of the second side wall 12c is larger than the area of the first side walls 12b. The opening 12h is formed in the top surface of the exterior body 12 surrounded by the pair of first side walls 12b and the pair of second side walls 12c. The sealing plate 14 is attached to the exterior body 12 so as to seal the opening 12h of the exterior body 12. The sealing plate 14 has a substantially rectangular shape in plan view. The sealing plate 14 faces the bottom wall 12a of the exterior body 12. The battery case 10 is formed by the sealing plate 14 bonded (e.g., by welding) to the periphery of the opening 12h of the exterior body 12. The sealing plate 14 is bonded by, for example, welding such as laser welding.

As shown in Figs. 1 and 2, the gas discharge valve 17 is formed in the sealing plate 14. The gas discharge valve 17 is configured to open and discharge gas inside the battery case 10 when the pressure inside the battery case 10 exceeds a predetermined value or more.

The sealing plate 14 is provided with a liquid injection hole 15 and two terminal inlets 18 and 19 in addition to the gas discharge valve 17. The liquid injection hole 15 is an opening communicating with an internal space of the exterior body 12 and is provided for injecting an electrolyte in the manufacturing process of the battery 100. The liquid injection hole 15 is sealed with a sealing member 16. For example, the sealing member 16 is suitably a blind rivet. This allows the sealing member 16 to be firmly fixed inside the battery case 10.

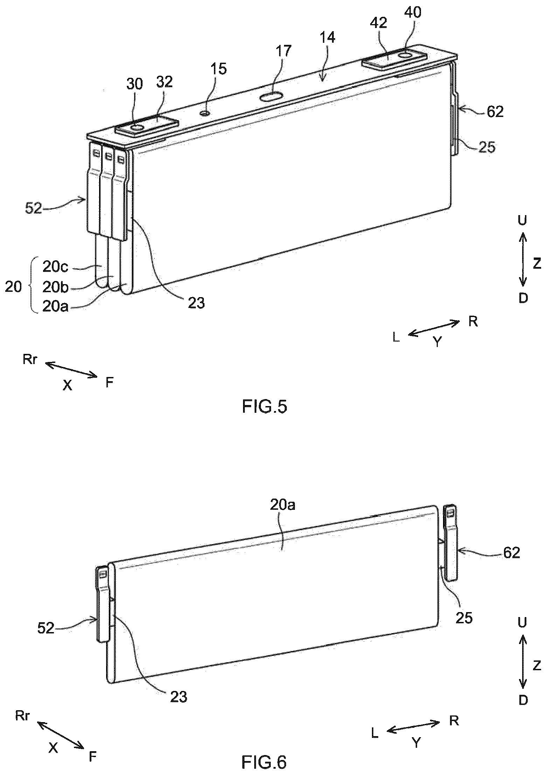

Fig. 5 is a perspective view schematically illustrating the electrode body group 20 attached to the sealing plate 14. In the present embodiment, the battery case 10 houses multiple (here, three) electrode bodies 20a, 20b, and 20c inside. The number of electrode bodies housed inside a single battery case 10 is not particularly limited, and may be one, or two or more (multiple). As shown in Fig. 2, the positive electrode collecting unit 50 is arranged on one side (left side in Fig. 2) of each electrode body in the long side direction Y, and the negative electrode collecting unit 60 is arranged on the other side (the right side in Fig. 2) in the long side direction Y. The electrode bodies 20a, 20b, and 20c are connected in parallel. The electrode bodies 20a, 20b, and 20c may be connected in series. The electrode body group 20 herein is housed inside the exterior body 12 of the battery case 10 with being covered with an electrode body holder 29 (see Fig. 3) made of a resin sheet with the winding axis WL along the bottom wall 12a.

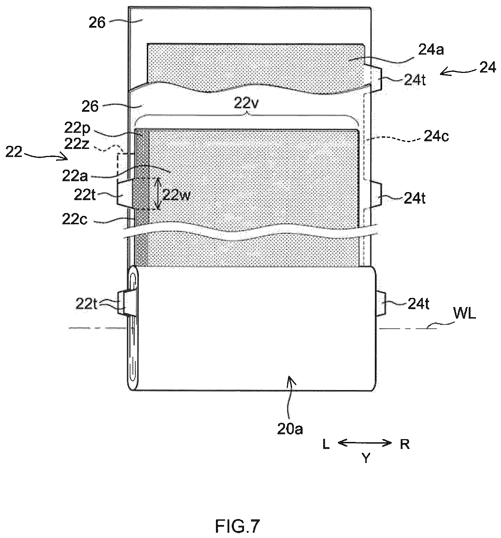

Fig. 6 is a perspective view schematically illustrating the electrode body 20a. Fig. 7 is a schematic view illustrating a configuration of the electrode body 20a. The electrode body 20a will be described in detail below as an example. The same configuration can be applied to the electrode bodies 20b and 20c.

As shown in Fig. 7, the electrode body 20a includes a positive electrode 22, a negative electrode 24, and a separator 26. The electrode body 20a is a wound electrode body where a strip-like positive electrode 22 and a strip-like negative electrode 24 are stacked via two strip-like separators 26, and wound around the winding axis WL. Note that the structure of the electrode body does not limit the technology disclosed herein. For example, the electrode body may be a stacked electrode body consisting of multiple square (typically rectangular) positive electrodes and multiple square (typically rectangular) negative electrodes, stacked in an insulated manner.

The electrode body 20a has a flat shape. The electrode body 20a is arranged inside the exterior body 12 so that the winding axis WL is substantially parallel with the long side direction Y. Specifically, as shown in Fig. 3, the electrode body 20a includes a pair of curved portions (R portions) 20r facing the bottom wall 12a of the exterior body 12 and the sealing plate 14, and a flat portion 20f which connects the pair of curved portions 20r and faces the second side wall 12c of the exterior body 12. The flat portion 20f extends along the second side wall 12c.

As shown in Fig. 7, the positive electrode 22 includes: a positive electrode collecting unit 22c, and a positive electrode active material layer 22a and a positive electrode protective layer 22p fixed to at least one surface of the positive electrode collecting unit 22c. Note that the positive electrode protective layer 22p is not essential, and may be omitted in other embodiments. The positive electrode collecting unit 22c has a strip shape. The positive electrode collecting unit 22c is made of, for example, an electroconductive metal such as aluminum, an aluminum alloy, nickel, and stainless steel. The positive electrode collecting unit 22c herein is a metal foil, specifically an aluminum foil.

At one end of the positive electrode collecting unit 22c in the long side direction Y (left end in Fig. 7), multiple positive electrode tabs 22t are provided. Multiple positive electrode tabs 22t are spaced (intermittently) along the longitudinal direction of the strip-like positive electrode 22. The positive electrode tabs 22t protrude outward from the separators 26 toward one side of the axial direction of the winding axis WL (left side in Fig. 7). The positive electrode tabs 22t may be provided on the other side of the axial direction of the winding axis WL (right side in Fig. 7), or may be provided on each of both sides of the axial direction of the winding axis WL. Each positive electrode tab 22t is part of the positive electrode collecting unit 22c, and made of a metal foil (aluminum foil). However, the positive electrode tabs 22t may be members separate from the positive electrode collecting unit 22c. In at least part of the positive electrode tab 22t, a region where the positive electrode active material layer 22a and the positive electrode protective layer 22p are not formed, and the positive electrode collecting unit 22c is exposed is formed.

As shown in Fig. 4, the positive electrode tabs 22t are stacked at one end of the winding axis WL in the axial direction (left end in Fig. 4) and constitute a positive electrode tab group 23. The positive electrode tabs 22t are connected to the positive electrode collecting unit 50 with being bent. This can increase the size of the body of the electrode body group 20 to be housed in the battery case 10, thereby achieving high energy density of the battery 100. As shown in Fig. 2, the positive electrode tab group 23 is electrically connected to the positive electrode terminal 30 via the positive electrode collecting unit 50. Specifically, the positive electrode tab group 23 and the positive electrode second collecting unit 52 are connected at a connection portion J (see Fig. 4). In some aspects, the width in the perpendicular direction to the longitudinal direction of the positive electrode collecting unit 22c (see 22v in Fig. 7) is, for example, 10 cm or more, preferably 20 cm or more, more preferably 25 cm or more. The same applies to the negative electrode collecting unit 24c.

The positive electrode second collecting unit 52 is electrically connected to the positive electrode terminal 30 via the positive electrode first collecting unit 51. The size of each positive electrode tab 22t (the length along the long side direction Y and the width in the direction orthogonal to the long side direction Y, see Fig. 7) can be adjusted, as appropriate, according to, for example, the position where the positive electrode tab 22t is formed and the like in consideration of the state of connection to the positive electrode collecting unit 50. The sizes of the positive electrode tabs 22t differ from each other such that the outer edges thereof are aligned when curved. The technology disclosed herein may also be applied to the case where the size of each positive electrode tab is the same. Although the positive electrode tabs 22t each have a trapezoid shape, the technology disclosed herein may also be applied to the case where the positive electrode tab has another shape (e.g., a rectangular). In some aspects, when the number of layers of the positive electrode stacked in the wound electrode body is M, and when the number of positive electrode tabs in the positive electrode is N, the ratio (N/M) is, for example, 0.5 or more, preferably 0.6 or more, more preferably 0.8 or more, yet more preferably 0.9 or more (may also be 1). The same applies to the portion corresponding to the negative electrode. M is preferably 10 or more, more preferably 20 or more, yet more preferably 30 or more.

The positive electrode active material layer 22a is provided in a strip shape along the longitudinal direction of the strip-like positive electrode collecting unit 22c, as shown in Fig. 7. The positive electrode active material layer 22a contains a positive electrode active material (e.g., a lithium-transition metal composite oxide such as lithium-nickel-cobalt-manganese composite oxide) which can reversibly store and release charge carriers. The content of the positive electrode active material is approximately 80 mass% or more, typically 90 mass% or more, for example, 95 mass% or more relative to 100 mass% of the entire solid content of the positive electrode active material layer 22a. The positive electrode active material layer 22a may further contain optional components such as an electroconductive material, a binder, and various additives besides the positive electrode active material. The electroconductive material used may be, for example, a carbon material such as acetylene black (AB). The binder used may be, for example, polyvinylidene fluoride (PVdF).

As shown in Fig. 7, the positive electrode protective layer 22p is provided at the boundary between the positive electrode collecting unit 22c and the positive electrode active material layer 22a in the long side direction Y. The positive electrode protective layer 22p herein is provided at one end (left end in Fig. 7) of the positive electrode collecting unit 22c in the axial direction of the winding axis WL. The positive electrode protective layer 22p may be provided at each of both ends in the axial direction. The positive electrode protective layer 22p is provided in a strip shape along the positive electrode active material layer 22a. The positive electrode protective layer 22p may contain an inorganic filler (e.g., alumina). The content of the inorganic filler is approximately 50 mass% or more, typically 70 mass% or more, for example, 80 mass% or more relative to 100 mass% of the entire solid content of the positive electrode protective layer 22p. The positive electrode protective layer 22p may further contain optional components such as an electroconductive material, a binder, and various additives besides the inorganic filler. The electroconductive material and the binder may be the same as those illustrated as possible to be contained in the positive electrode active material layer 22a.

As shown in Fig. 7, the negative electrode 24 includes a negative electrode collecting unit 24c and a negative electrode active material layer 24a fixed to at least one surface of the negative electrode collecting unit 24c. The negative electrode collecting unit 24c has a strip shape. The negative electrode collecting unit 24c is made of, for example, an electroconductive metal such as copper, a copper alloy, nickel, and stainless steel. The negative electrode collecting unit 24c herein is a metal foil, specifically a copper foil.

At one end of the negative electrode collecting unit 24c in the axial direction of the winding axis WL (right end in Fig. 7), multiple negative electrode tabs 24t are provided. Multiple negative electrode tabs 24t are spaced (intermittently) along the longitudinal direction of the strip-like negative electrode 24. The negative electrode tabs 24t protrude outward from the separators 26 toward one side of the axial direction (right side in Fig. 7). The negative electrode tabs 24t may be provided at the other end (left end in Fig. 7) of the axial direction, or at both ends of the axial direction. Each negative electrode tab 24t is part of the negative electrode collecting unit 24c, and made of a metal foil (copper foil). However, the negative electrode tabs 24t may be members separate from the negative electrode collecting unit 24c. In at least part of the negative electrode tab 24t, a region where the negative electrode active material layer 24a is not formed, and the negative electrode collecting unit 24c is exposed is formed.

As shown in Fig. 4, multiple negative electrode tabs 24t are stacked at one end in the axial direction (right end in Fig. 4) and constitute the negative electrode tab group 25. The negative electrode tab group 25 is provided at a position symmetrical to the positive electrode tab group 23 in the axial direction. The negative electrode tabs 24t are connected to the negative electrode collecting unit 60 with being bent. This can increase the size of the body of the electrode body group 20 to be housed in the battery case 10, thereby achieving high energy density of the battery 100. As shown in Fig. 2, the negative electrode tab group 25 is electrically connected to the negative electrode terminal 40 via the negative electrode collecting unit 60. Specifically, the negative electrode tab group 25 and the negative electrode second collecting unit 62 are connected at a connection portion J (see Fig. 4). The negative electrode second collecting unit 62 is electrically connected to the negative electrode terminal 40 via the negative electrode first collecting unit 61. As in the case of the positive electrode tabs 22t, the sizes of the negative electrode tabs 24t differ from each other such that the outer edges thereof are aligned when curved. The technology disclosed herein may also be applied to the case where the size of each negative electrode tab is the same. Although the negative electrode tabs 24t each have a trapezoid shape, the technology disclosed herein may also be applied to the case where the negative electrode tab has another shape (e.g., a rectangular).

The negative electrode active material layer 24a is provided in a strip shape along the longitudinal direction of the strip-like negative electrode collecting unit 24c, as shown in Fig. 7. The negative electrode active material layer 24a contains a negative electrode active material (e.g., a carbon material such as graphite) which can reversibly store and release charge carriers. The content of the negative electrode active material is approximately 80 mass% or more, typically 90 mass% or more, for example, 95 mass% or more relative to 100 mass% of the entire solid content of the negative electrode active material layer 24a. The negative electrode active material layer 24a may further contain optional components such as a binder, a dispersant, and various additives. Examples of the binder used include rubbers such as styrene-butadiene rubber (SBR). Examples of the dispersant used include celluloses such as carboxymethyl cellulose (CMC).

As shown in Fig. 7, the separators 26 are each a member insulating between the positive electrode active material layer 22a of the positive electrode 22 and the negative electrode active material layer 24a of the negative electrode 24. The separators 26 are each suitably a resin-made porous sheet made of a polyolefin resin such as polyethylene (PE) and polypropylene (PP). The separator 26 preferably includes a base portion made of the resin-made porous sheet and a heat-resistance layer (HRL) formed on at least one surface of the base portion and containing an inorganic filler. Examples of the inorganic filler used include alumina, boehmite, aluminium hydroxide, and titania.

The electrolyte may be the same as commonly used one without particular limitations. The electrolyte is, for example, a nonaqueous electrolyte containing nonaqueous solvent and a supporting electrolyte. Examples of the nonaqueous solvent include carbonates such as ethylene carbonate, dimethyl carbonate, and ethyl methyl carbonate. Examples of the supporting electrolyte include fluorine-containing lithium salts such as LiPF₆. The electrolyte may be solid (solid electrolyte) and integral with the electrode body group 20.

As shown in Fig. 2, the positive electrode terminal 30 is inserted into the terminal inlet 18 formed at one end (left end in Fig. 2) of the sealing plate 14 in the long side direction Y The positive electrode terminal 30 is made of preferably metal, more preferably aluminum or an aluminum alloy, for example. The negative electrode terminal 40 is inserted into the terminal inlet 19 formed at the other end (right end in Fig. 2) of the sealing plate 14 in the long side direction Y. The negative electrode terminal 40 is made of preferably metal, more preferably copper or a copper alloy, for example. These electrode terminals (the positive electrode terminal 30 and the negative electrode terminal 40) herein protrude from the same surface (specifically the sealing plate 14) of the battery case 10. However, the positive electrode terminal 30 and the negative electrode terminal 40 may protrude form different surfaces of the battery case 10. The electrode terminals (the positive electrode terminal 30 and the negative electrode terminal 40) inserted into the terminal inlets 18 and 19 are preferably fixed to the sealing plate 14 by crimping processing or the like.

As mentioned above, the positive electrode terminal 30 is, as shown in Fig. 2, is electrically connected to the positive electrode 22 of each of the electrode bodies (see Fig. 7) via the positive electrode collecting unit 50 (the positive electrode first collecting unit 51 and the positive electrode second collecting unit 52) inside the exterior body 12. The positive electrode terminal 30 is insulated from the sealing plate 14 by the positive electrode internal insulating member 70 and the gasket 90. The positive electrode internal insulating member 70 includes a base portion 70a interposed between the positive electrode first collecting unit 51 and the sealing plate 14, and a protrusion 70b protruding from the base portion 70a toward the electrode body group 20. The positive electrode terminal 30 exposed to the outside of the battery case 10 through the terminal inlet 18 is connected to the positive electrode external electroconductive member 32 outside the sealing plate 14. On the other hand, the negative electrode terminal 40 is, as shown in Fig. 2, electrically connected to the negative electrode 24 of each of the electrode bodies (see Fig. 7) via the negative electrode collecting unit 60 (the negative electrode first collecting unit 61 and the negative electrode second collecting unit 62) inside the exterior body 12. The negative electrode terminal 40 is insulated from the sealing plate 14 by the negative electrode internal insulating member 80 and the gasket 90. Similarly to the positive electrode internal insulating member 70, the negative electrode internal insulating member 80 includes a base portion 80a interposed between the negative electrode first collecting unit 61 and the sealing plate 14, and a protrusion 80b protruding from the base portion 80a toward the electrode body group 20. The negative electrode terminal 40 exposed to the outside of the battery case 10 through the terminal inlet 19 is connected to the negative electrode external electroconductive member 42 outside the sealing plate 14. The external insulating members 92 intervene between the external electroconductive members (the positive electrode external electroconductive member 32 and the negative electrode external electroconductive member 42) and the outer surface of the sealing plate 14. The external insulating members 92 can insulate between the external electroconductive members 32 and 42 and the sealing plate 14. The protrusions 70b and 80b of the internal insulating members (the positive electrode internal insulating member 70 and the negative electrode internal insulating member 80) are arranged between the sealing plate 14 and the electrode body group 20. The protrusions 70b and 80b of the internal insulating members can restrict upward movement of the electrode body group 20, and prevent contact between the sealing plate 14 and the electrode body group 20.

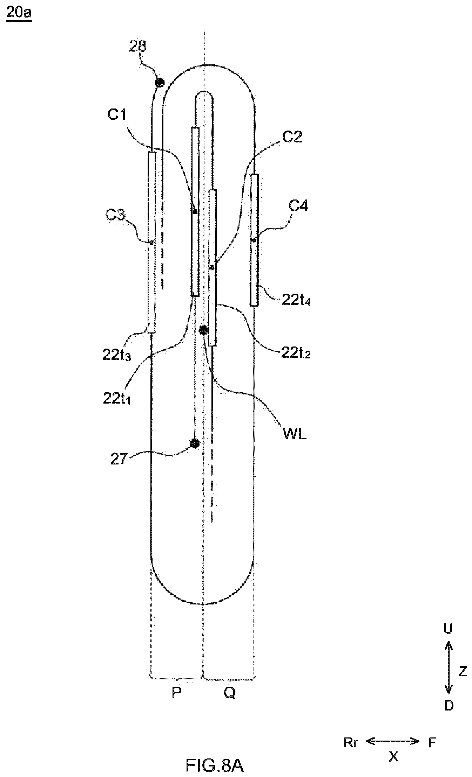

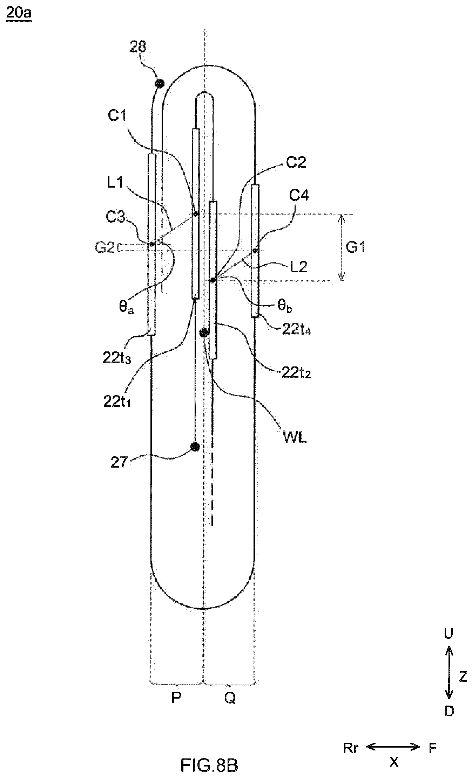

Next, the form of the end surface on the positive electrode side of the electrode body 20a according to the present embodiment will be described with reference to Figs. 8A and 8B. Note that the description of members other than the positive electrode is omitted here for ease of explanation. Components in Figs. 8A and 8B will first be described. For ease of explanation, Figs. 8A and 8B show only four positive electrode tabs 22t (specifically, a first tab 22t₁, a second tab 22t₂, a third tab 22t₃, and a fourth tab 22t₄) to be focused on herein out of the positive electrode tabs 22t in the electrode body 20a In other words, the electrode body 20a includes tabs besides the positive electrode tabs 22t shown in Figs. 8A and 8B. The electrode body 20a includes a first region P on one side relative to the winding axis WL and a second region Q on the other side relative to the winding axis WL in the thickness direction X (in other words, the stacking direction of the electrode body 20a). Among the positive electrode tabs 22t present in the first region P, the first tab 22t₁ is located at a position closest to the winding axis WL in the thickness direction X (on the innermost periphery side). Among the positive electrode tabs 22t present in the second region Q, the second tab 22t₂ is located at a position closest to the winding axis WL in the thickness direction X (on the innermost periphery side). Among the positive electrode tabs 22t present in the first region P, the third tab 22t₃ is located at a position farthest to the winding axis WL in the thickness direction X (on the outermost periphery side). Among the positive electrode tabs 22t present in the second region Q, the fourth tab 22t₄ is located at a position farthest to the winding axis WL in the thickness direction X (on the innermost periphery side). The distance between the middle C1 of the base width of the first tab 22t₁ and the middle C2 of the base width of the second tab 22t₂ in a perpendicular direction Z to the thickness direction X is defined as G1, and the distance between the middle C3 of the base width of the third tab 22t₃ and the middle C4 of the base width of the fourth tab 22t₄ in the perpendicular direction Z is defined as G2. The base width of the positive electrode tab 22t represents the width (22w in Fig. 7) of a boundary portion between (the body portion of) the positive electrode collecting unit 22c and the positive electrode tab 22t. The base width of the negative electrode tab 24t also represents the width of the portion corresponding to the negative electrode 24.

As shown in Fig. 8A, in the end surface on the positive electrode side of the electrode body 20a according to the present embodiment, the first tab 22t₁ and the third tab 22ts are arranged such that the middle C1 of the base width of the first tab 22t₁ and the middle C3 of the base width of the third tab 22t₃ are displaced from each other in the perpendicular direction Z, and the second tab 22tz and the fourth tab 22t₄ are arranged such that the middle C2 of the base width of the second tab 22t₂ and the middle C4 of the base width of the fourth tab 22tt are displaced from each other in the perpendicular direction Z. With this configuration, it is possible to suitably check whether or not the tabs near the innermost periphery (in this case, the first tab 22t1 and the second tab 22t2), which are prone to be broken are actually broken. Further, by selecting and using tabs that are not broken, a highly reliable battery where multiple tabs and current collecting units are stably connected can be obtained.

As shown in Fig. 8B, in the present embodiment, when the distance between the middle C1 and the middle C2 in the perpendicular direction Z is G1, and the distance between the middle C3 and the middle C4 in the perpendicular direction Z is G2, the G1 and the G2 satisfy the relationship G1 > G2.

As shown in Fig. 8A, in the present embodiment, a winding beginning end 27 of the positive electrode 22 is present in the first region P. In the perpendicular direction Z, the middle C1 is located farther from the winding axis WL than the middle C2. In the present embodiment, a winding finish end 28 of the positive electrode 22 is located near the curved portion 20r of the electrode body 20a. As shown in Fig. 8A, in the present embodiment, the middle C3 and the middle C4 are located closer to the sealing plate 14 than the winding axis WL. However, the description is not intended to limit the present disclosure to these configurations.

As shown in Fig. 8B, in the present embodiment, when the straight line passing through the middle C1 and the middle C3 is a first straight line L1, the straight line passing through the middle C2 and the middle C4 is a second straight line L2, the first straight line L1 and the second straight line L2 are inclined to the thickness direction X. Further, in the perpendicular direction Z, the first straight line L1 and the second straight line L2 do not lie on a straight line. The first straight line L1 and the second straight line L2 are inclined toward the same direction in the thickness direction X. A value of the angle θa formed between the straight line L1 and the thickness direction X and a value of the angle θb formed between the straight line L2 and the thickness direction X are not particularly limited as long as the effects of the technology disclosed herein are exhibited. On the other hand, in light of easily checking breakage of tabs (here, the first tab 22t₁ and the second tab 22t₂) on the innermost periphery, the angle θa and the angle θb are preferably large. The angle θa and the angle θb are each, for example, 15° or more, preferably 30° or more preferably, yet more preferably 45° or more (the upper limit thereof can be, for example, 70°). The angle θa and the angle θb may be identical to or different from each other. The same applies to the second to the seventh embodiments. The angles θa and θb can be measured with an image measuring device, for example.

Although details are not shown in the drawings, in the present embodiment, multiple positive electrode tabs 22t with being collected are in connection with the positive electrode collecting unit 50, and the first tab 22t₁ is closer to the positive electrode collecting unit 50 than the third tab 22t₃. The length of the third tab 22t₃ in the protruding direction is larger than the length of the first tab 22t₁ in the protruding direction, and the length of the fourth tab 22t₄ in the protruding direction is larger than the length of the second tab 22t₂ in the protruding direction. The length of the positive electrode tab 22t in the protruding direction represents the shortest distance (22z in Fig. 7) from the base of the positive electrode tab 22t to the tip of the positive electrode tab 22t in the protruding direction (i.e., the Y direction). For the negative electrode 24, the corresponding portion is shown. The base width of the third tab 22t₃ is larger than the base width of the first tab 22t₁. The base width of the fourth tab 22t₄ is smaller than the base width of the second tab 22t₂.

In some aspects, a value of the G2 is, for example, 15 mm or less, preferably 12 mm or less, more preferably 5 mm or less, yet more preferably 2 mm or less (e.g., 1 mm or less). In some aspects, a value of the G1 is, for example, 20 mm or less, preferably 15 mm or less, more preferably 10 mm or less, yet more preferably 5 mm or less. Values of the G1 and the G2 can be measured with a ruler, for example. The same applies to the G3 to be described later.

### <Method of Manufacturing Battery>

Next, an example of the method of manufacturing the battery according to the present embodiment will be described. The battery 100 can be manufactured by providing the battery case 10 (the exterior body 12 and the sealing plate 14), the electrode body group 20 (the electrode bodies 20a, 20b, and 20c), the electrolyte, the positive electrode terminal 30, the negative electrode terminal 40, the positive electrode collecting unit 50 (the positive electrode first collecting unit 51 and the positive electrode second collecting units 52), the negative electrode collecting unit 60 (the negative electrode first collecting unit 61 and the negative electrode second collecting unit 62), the positive electrode internal insulating member 70, and the negative electrode internal insulating member 80 and a manufacturing method including, for example, first attaching, second attaching, inserting, and sealing. The manufacturing method disclosed herein may further include other processes at any stage.

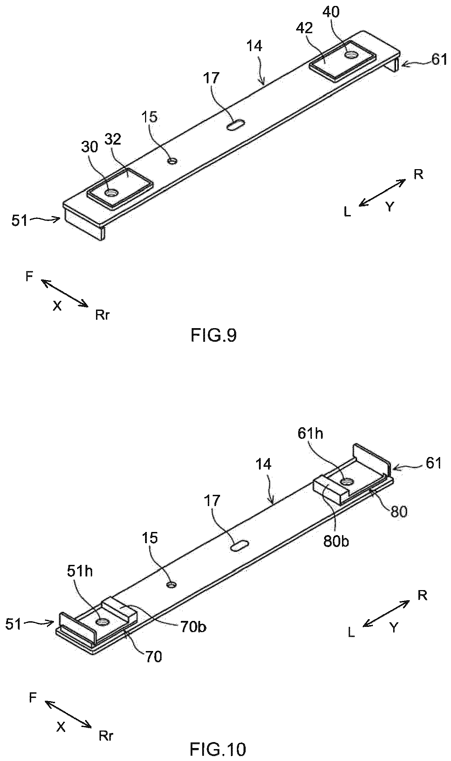

In the first attaching, a first integrated body is produced as shown in Figs. 9 and 10. Specifically, first, a positive electrode terminal 30, a positive electrode first collecting unit 51, a positive electrode internal insulating member 70, a negative electrode terminal 40, a negative electrode first collecting unit 61, and a negative electrode internal insulating member 80 are attached to the sealing plate 14.

The positive electrode terminal 30, the positive electrode first collecting unit 51, and the positive electrode internal insulating member 70 are fixed to the sealing plate 14 by crimping processing (riveting), for example. The crimping processing is performed such that a gasket 90 is sandwiched between the outer surface of the sealing plate 14 and the positive electrode terminal 30, and the positive electrode internal insulating member 70 is sandwiched between the inner surface of the sealing plate 14 and the positive electrode first collecting unit 51. The material of the gasket 90 may be the same as that of the positive electrode internal insulating member 70. Specifically, the positive electrode terminal 30 before crimping processing is inserted, from above the sealing plate 14, into the through hole of the gasket 90, the terminal inlet 18 of the sealing plate 14, the through hole of the positive electrode internal insulating member 70, and the through hole 51h of the positive electrode first collecting unit 51 in this order to protrude downward the sealing plate 14. Then, a portion of the positive electrode terminal 30 protruding downward from the sealing plate 14 is crimped so that a compressive force is applied against the up-down direction Z. Thus, a crimped portion is formed at the tip of the positive electrode terminal 30 (lower end in Fig. 2).

In such crimping processing, the gasket 90, the sealing plate 14, the positive electrode internal insulating member 70, and the positive electrode first collecting unit 51 are integrally fixed to the sealing plate 14, and the terminal inlet 18 is sealed. The crimped portion may be bonded to the positive electrode first collecting unit 51 by welding. This can further improve reliability of the electroconduction.

Fixing of the negative electrode terminal 40, the negative electrode first collecting unit 61, and the negative electrode internal insulating member 80 can be performed in the same manner as for the positive electrode. Specifically, the negative electrode terminal 40 before crimping processing is inserted, from above the sealing plate 14, into the through hole of the gasket, the terminal inlet 19 of the sealing plate 14, the through hole of the negative electrode internal insulating member 80, and the through hole 61h of the negative electrode first collecting unit 61 in this order to protrude downward the sealing plate 14. Then, a portion of the negative electrode terminal 40 protruding downward from the sealing plate 14 is crimped so that a compressive force is applied toward the up-down direction Z. Thus, a crimped portion is formed at the tip of the negative electrode terminal 40 (lower end in Fig. 2).

The positive electrode external electroconductive member 32 and the negative electrode external electroconductive member 42 are attached to the outer surface of the sealing plate 14 via the external insulating members 92. The material of the external insulating members 92 may be the same as that of the positive electrode internal insulating member 70. The timing of attaching the positive electrode external electroconductive member 32 and the negative electrode external electroconductive member 42 may be after the inserting (e.g., after sealing the liquid injection hole 15).

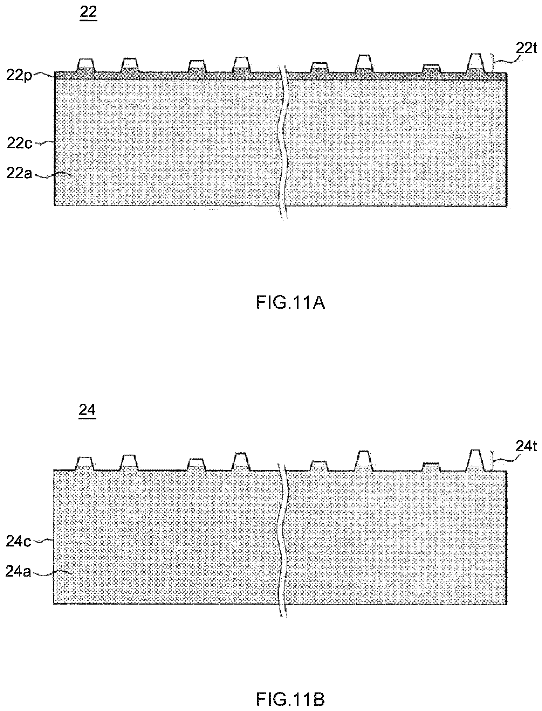

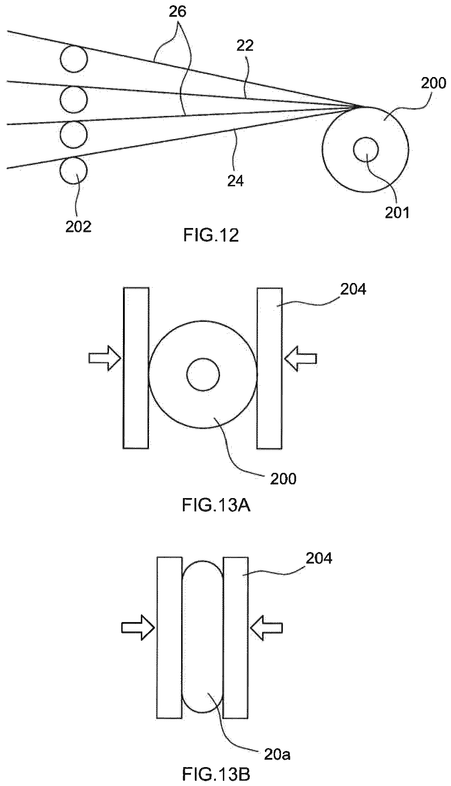

Then, electrode bodies 20a, 20b, and 20c are provided. Specifically, first, a long separator 26, a positive electrode 22 (see Fig. 11A), and a negative electrode 24 (see Fig. 11B) are provided. Subsequently, as shown in Fig. 12, the separator 26, the positive electrode 22, and the negative electrode 24 provided above are transported to a winding core 201 by using a transport roller 202, and is wound around the winding core 201, thereby producing a wound body 200. The winding core 201 used herein is cylindrical, but is not limited thereto, and may be, for example, flat. The sheets are wound such that positive electrode tabs 22t of the positive electrode 22 only protrude from one side edge (the left side in Fig. 7) in the width direction Y, and the negative electrode tabs 24t of the negative electrode 24 only protrude from the other side edge (the right side in Fig. 7). The number of times wound is adjusted, as appropriate, in light of the performance, production efficiency, and the like of the intended battery 100. In some aspects, the number of times wound is 20 or more, or 30 or more.

An example of the method of displacing the middle C1 and the middle C3 from each other and the middle C2 and the middle C4 from each other in the perpendicular direction Z includes a method of adjusting the timing when the positive electrode 22 begins to be wound around the winding core 201 (hereinafter, also merely referred to as the "winding timing"). The winding timing differs depending on the type of the winding machine to be used, the sizes of the separator, the positive electrode, and the negative electrode, and the like. Thus, those skilled in the art can determine the winding timing by conducting preliminary experiments or the like, as appropriate. Further, for example, when the wound body is subjected to press molding in the molding to be described later, the winding timing can be adjusted also by changing the position where the wound body is pressed. The winding timing may be adjusted also by changing intervals of the positive electrode tabs in the positive electrode in the longitudinal direction, or changing the tension applied to the positive electrode when the positive electrode is wound around the winding core. The adjustment may be achieved by an appropriate combination thereof. Among the methods listed above, the method of adjusting the timing when the positive electrode is wound around the winding core and the method of changing the position where the wound body is pressed when the wound body is subjected to press molding are suitable in light of changing the position more easily and reproducibility.

Then, the wound body 200 produced is molded into a flat shape. Specifically, in the present embodiment, the wound body is placed in a press machine 204 such as shown in Fig. 13A, and is then pressed in the direction of the white arrow, thereby obtaining a flat wound electrode body (electrode body 20a) such as shown in Fig. 13B. Here, the press pressure is suitably adjusted, as appropriate, according to the number of times the wound body is wound, the size of the wound body, and the like. As shown in Fig. 3, the flat wound electrode body after the press molding has a pair of curved portions 20r each having a curved outer surface, and a flat portion 20f having a flat outer surface connected to the pair of curved portions 20r. As shown in Fig. 7, at one end of the wound electrode body after the press molding in the width direction Y, a positive electrode tab group 23 where positive electrode tabs 22t are stacked is formed, and at the other end, a negative electrode tab group 25 where negative electrode tabs 24t are stacked is formed. In a middle portion of the wound electrode body in the width direction Y, a core portion where the positive electrode active material layer 22a and the negative electrode active material layer 24a face each other is formed. Alternatively, the surface layer of the separator 26 and the positive electrode 22 (the negative electrode 24) can be adhered to each other by press molding.

In the present embodiment, the separator 26 is arranged on the outermost periphery surface of the wound electrode body (the electrode body 20a) after the press molding, and a winding stopper tape is adhered to the winding finish end of the separator 26, thereby maintaining the shape of the wound electrode body. The winding stopper tape used can be a known one used for the wound electrode body without particular limitations. As shown in Fig. 8A, in the present embodiment, the winding finish end 28 of the positive electrode 22 is arranged near one of the curved portions 20r of the electrode body 20a. In this manner, the electrode bodies 20a, 20b, and 20c according to the present embodiment are produced.

In the second attaching, a second integrated body shown in Fig. 5 is produced by using the first integrated body produced in the first attaching. In other words, the electrode body group 20 integral with the sealing plate 14 is produced. Specifically, as shown in Fig. 6, three electrode bodies 20a each with the positive electrode second collecting unit 52 and the negative electrode second collecting unit 62 are provided, and are arranged along the short side direction X as electrode bodies 20a, 20b, and 20c. At this time, the electrode bodies 20a, 20b, and 20c may be arranged so that the positive electrode second collecting unit 52 is arranged on one side in the long side direction Y (left side in Fig. 5), and the negative electrode second collecting unit 62 is arranged on the other side in the long side direction Y (right side in Fig. 5).

Then, as shown in Fig. 4, the positive electrode first collecting unit 51 fixed to the sealing plate 14 and the positive electrode second collecting units 52 of the electrode bodies 20a, 20b, and 20c are bonded to each other with the positive electrode tabs 22t curved. Further, the negative electrode first collecting unit 61 fixed to the sealing plate 14 and the negative electrode second collecting unit 62 of the electrode bodies 20a, 20b, and 20c are bonded to each other with the negative electrode tabs 24t curved. The bonding method used can be, for example, welding such as ultrasound welding, resistance welding, and laser welding. The bonding method is particularly preferably welding by irradiation with high-energy beams such as laser. By such welding processing, a bonding portion is formed in each of a recess of the positive electrode second collecting units 52 and a recess of the negative electrode second collecting unit 62.

In the inserting, the second integrated body produced in the second attaching is housed in an internal space of the exterior body 12. Specifically, first, an insulating resin sheet made of a resin material such as polyethylene (PE) is bent into a bag or a boxy shape, thereby preparing an electrode body holder 29. Then, an electrode body group 20 is housed in the electrode body holder 29. Thereafter, the electrode body group 20 covered with the electrode body holder 29 is inserted into the exterior body 12. If the electrode body group 20 is heavy, approximately 1 kg or more, for example, 1.5 kg or more, further 2 kg to 3 kg, the exterior body 12 may be arranged so that the long side wall 12b of the exterior body 12 intersects the direction of gravity (the exterior body 12 is arranged horizontally), and the electrode body group 20 may be inserted into the exterior body 12.

In the sealing, the sealing plate 14 is bonded to the edge of the opening 12h of the exterior body 12 to seal the opening 12h. The sealing can be performed simultaneously with or after the inserting. In the sealing, the exterior body 12 and the sealing plate 14 are preferably bonded to each other by welding. The bonding between the exterior body 12 and the sealing plate 14 by welding can be performed by, for example, laser welding. An electrolyte is then injected into a liquid injection hole 15, and the liquid injection hole 15 is closed by the sealing member 16. Thus, a battery 100 is sealed. In this manner, battery 100 can be manufactured.

The battery 100 can be used for various applications. For example, the battery 100 can be suitably used for applications in which external forces such as vibrations or impact may be applied during use, for example, a power source (drive power source) for motors in vehicles (typically, passenger cars and trucks). Although not particularly limited thereto, examples of the types of the vehicles include plug-in hybrid vehicle (PHEV), a hybrid vehicle (HEV), and electric vehicles (BEV). The battery 100 can be used suitably as an assembled battery obtained by arranging multiple batteries 100 in the alignment direction and applying a load from the alignment direction with a constrained mechanism.

While some embodiments of the present disclosure have been described above, the embodiments are mere examples. The present disclosure can be executed in various other embodiments. The present disclosure can be executed based on the contents disclosed herein and the technical knowledge in the present field. The technology described in the appended claims include various modifications and changes of the foregoing embodiments. For example, it is possible to replace partially the embodiments with other aspects, and it is also possible to add other variations to the embodiments. If the technical feature is not described as essential, it can be eliminated, as appropriate.

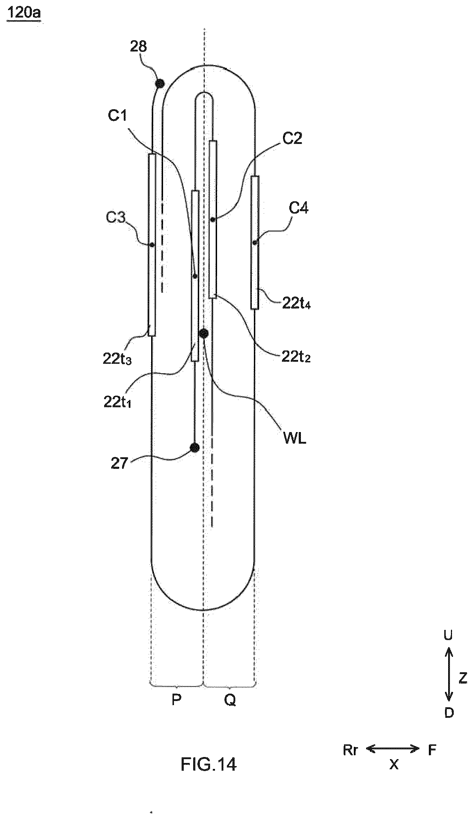

For example, Fig. 14 is a schematic view of an end surface on a positive electrode side of a wound electrode body 120a according to a second embodiment. As shown in Fig. 14, in the second embodiment, the middle C3 and the middle C4 lie on substantially the straight line in the thickness direction X, and the middle C1 and the middle C2 are displaced from each other in the perpendicular direction Z.

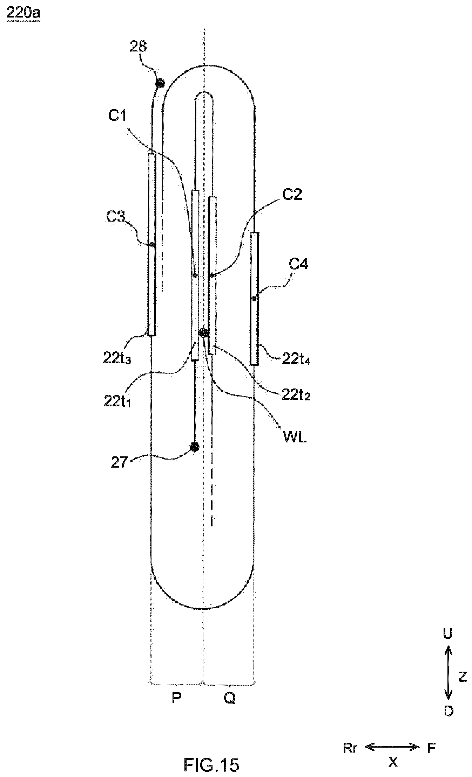

For example, Fig. 15 is a schematic view of an end surface on a positive electrode side of a wound electrode body 220a according to a third embodiment. As shown in Fig. 15, in the third embodiment, the middle C1 and the middle C2 lie on substantially the straight line in the thickness direction X, and the middle C3 and the middle C4 are displaced from each other in the perpendicular direction Z.

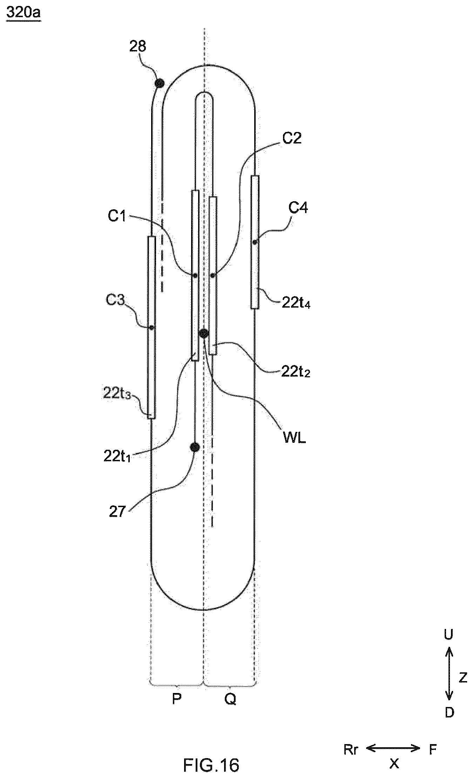

For example, Fig. 16 is a schematic view of an end surface on a positive electrode side of a wound electrode body 320a according to a fourth embodiment. As shown in Fig. 16, in the fourth embodiment, the middle C1 and the middle C2 lie on substantially the straight line in the thickness direction X, and the middle C3 and the middle C4 are displaced from each other in the perpendicular direction Z.

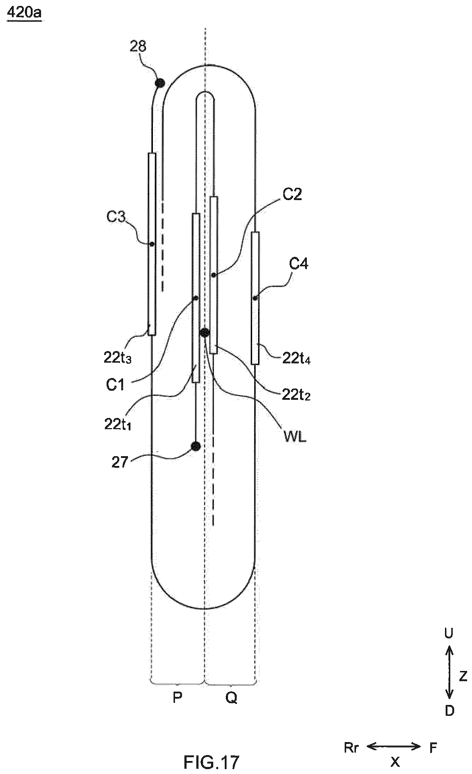

For example, Fig. 17 is a schematic view of an end surface on a positive electrode side of a wound electrode body 420a according to a fifth embodiment. As shown in Fig. 17, in the fifth embodiment, the middle C1, the middle C2, the middle C3, and the middle C4 are displaced from each other in the perpendicular direction Z.

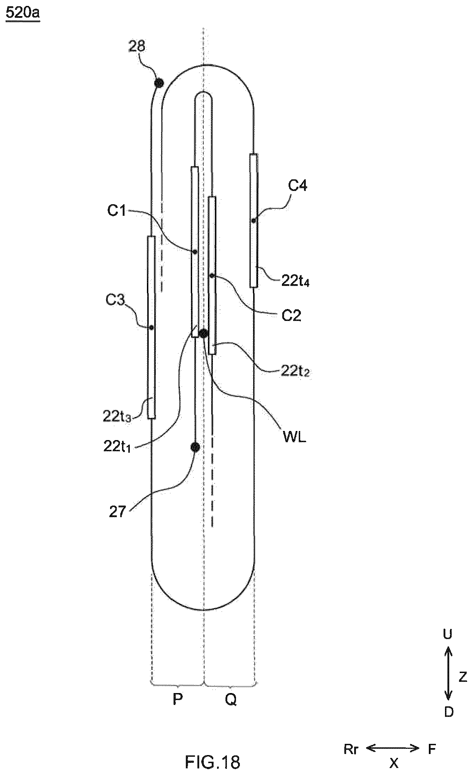

For example, Fig. 18 is a schematic view of an end surface on the positive electrode side of the wound electrode body 520a according to a sixth embodiment. As shown in Fig. 18, in the sixth embodiment, the middle C1, the middle C2, the middle C3, and the middle C4 are displaced from each other in the perpendicular direction Z.

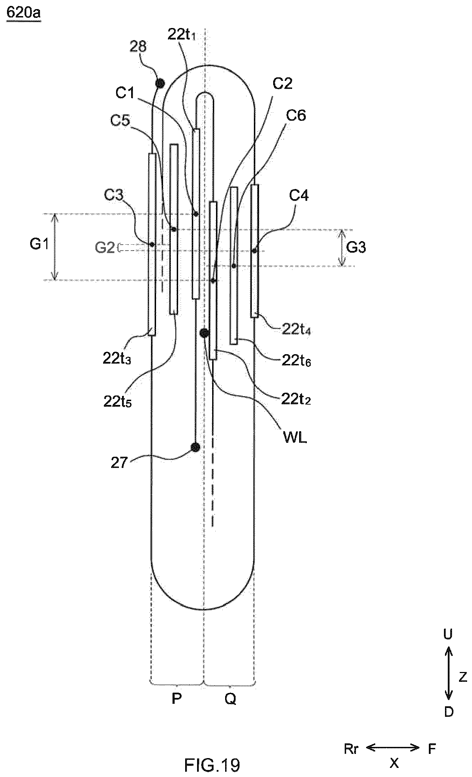

Fig. 19 is a schematic view of an end surface on a positive electrode side of a wound electrode body 620a according to a seventh embodiment. As shown in Fig. 19, in the electrode body 620a, the positive electrode 22 includes a fifth tab 22ts between the first tab 22t₁ and the third tab 22t₃, and a sixth tab 22t₆ between the second tab 22t₂ and the fourth tab 22t₄, in the thickness direction X. When the middle of the base width of the fifth tab 22ts is C5, and the middle of the base width of the sixth tab 22t₆ is C6, the G3 between the middle C5 and the middle C6 in the perpendicular direction Z are adjusted to satisfy G2 < G3 < G1. With this configuration, it is possible to more suitably check whether or not the tabs near the innermost periphery (in this case, the first tab 22t₁ and the second tab 22t₂), which are prone to be broken, are actually broken.

The electrode bodies according to the second embodiment to the seventh embodiment can be manufactured with reference to the method of manufacturing the electrode body according to the above-described embodiment (i.e., the first embodiment), for example. The second to the sixth embodiments may include the fifth tab and the sixth tab as in the seventh embodiment.

For example, in the embodiment, the technology disclosed herein is applied to only the positive electrode of the wound electrode body, but is not limited thereto. The technology disclosed herein may be applied to only the negative electrode of the wound electrode body, or applied to both the positive electrode and the negative electrode of the wound electrode body. For the negative electrode of the wound electrode body, the positions of the negative electrode tabs may be changed based on the description for the positive electrode.

For example, when the battery includes two electrode bodies, values of the G1 of the electrode bodies may differ from each other, and values of the G2 of the electrode bodies may differ from each other. In some aspects, the G1 of one of the two electrode bodies may be larger than the G1 of the other electrode body. In some aspects, the difference between the G1 of one of the two electrode bodies and the G1 of the other electrode body may be larger than the difference between the G2 of the one electrode body and the G2 of the other electrode body.

For example, the battery may further include a third electrode body which is another electrode body, the G1 of the third electrode body may differ from the G1 of one of the two electrode bodies and the G1 of the other electrode body, and the G2 of the third electrode body may differ from the G2 of one of the two electrode bodies and the G2 of the other electrode body.

Embodiments of the technology disclosed herein was described above. However, the embodiments are mere examples and do not limit the appended claims. The technology described in the appended claims includes various modifications and changes of the foregoing specific examples.

## Claims

1. A battery (100) comprising:
a flat wound electrode body (20a,20b,20c) including a first electrode (22), a second electrode (24) having a polarity different from the first electrode (22), and a separator (26), the first electrode (22) and the second electrode (24) being wound via the separator (26); and
a battery case (10) housing the wound electrode body (20a,20b,20c), wherein
multiple tabs (22t) connected to the first electrode (22) protrude from one end of the wound electrode body (20a,20b,20c) in the winding axis direction,
the tabs (22t) are in connection with a first electrode collecting unit (50),
the wound electrode body (20a,20b,20c) includes a first region (P) on one side relative to a winding axis and a second region (Q) on the other side relative to the winding axis in the thickness direction of the wound electrode body (20a,20b,20c),
the tabs (22t) include a first tab (22t₁), a second tab (22t₂), a third tab (22t₃), and a fourth tab (22ta),
among the tabs (22t) present in the first region (P), the first tab (22t₁) is located at a position closest to the winding axis of the wound electrode body (20a,20b,20c) in the thickness direction of the wound electrode body (20a,20b,20c),
among the tabs (22t) present in the second region (Q), the second tab (22t₂) is located at a position closest to the winding axis of the wound electrode body (20a,20b,20c) in the thickness direction of the wound electrode body (20a,20b,20c),
among the tabs (22t) present in the first region (P), the third tab (22t₃) is located at a position farthest to the winding axis of the wound electrode body (20a,20b,20c) in the thickness direction of the wound electrode body (20a,20b,20c),
among the tabs (22t) present in the second region (Q), the fourth tab (22t₄) is located at a position farthest to the winding axis of the wound electrode body (20a,20b,20c) in the thickness direction of the wound electrode body (20a,20b,20c), and
at the one end,
the first tab (22t₁) and the third tab (22t₃) are arranged such that a middle C1 of a base width of the first tab (22t₁) and a middle C3 of a base width of the third tab (22t₃) are displaced from each other in a perpendicular direction to the thickness direction, and
the second tab (22t₂) and the fourth tab (22t₄) are arranged such that a middle C2 of a base width of the second tab (22t₂) and a middle C4 of a base width of the fourth tab (22t₄) are displaced from each other in the perpendicular direction.

2. The battery according to claim 1, wherein
when a distance between the middle C1 and the middle C2 in the perpendicular direction is G1, and
a distance between the middle C3 and the middle C4 in the perpendicular direction is G2, and
the G1 and the G2 satisfy a relationship G1 > G2.

3. The battery according to claim 1 or 2, wherein
a winding beginning end (27) of the first electrode (22) is present in the first region (P), and
in the perpendicular direction, the middle C1 is located farther from the winding axis of the wound electrode body (20a,20b,20c) than the middle C2.

4. The battery according to any one of claims 1 to 3, wherein
the battery case (10) includes:
an exterior body (12) having a bottom wall (12a), a pair of first side walls (12b) extending from the bottom wall (12a) and facing each other, a pair of second side walls (12c) extending from the bottom wall (12a) and facing each other, and an opening (12h) facing the bottom wall (12a); and
a sealing plate (14) sealing the opening (12h),
the wound electrode body (20a,20b,20c) is arranged such that the winding axis extends along the bottom wall, and
the middle C3 and the middle C4 are located closer to the sealing plate (14) than to the winding axis.

5. The battery according to any one of claims 2 to 4, wherein
the wound electrode body (20a,20b,20c) further includes a fifth tab (22ts) and a sixth tab (22t₆) in the first electrode (22),
the fifth tab (22ts) is arranged between the first tab (22ti) and the third tab (22t₃) in the thickness direction,
the sixth tab (22t₆) is arranged between the second tab (22tz) and the fourth tab (22t₄) in the thickness direction, and
at the one end,
when a middle of a base width of the fifth tab (22t₅) is a middle C5, a middle of a base width of the sixth tab (22t₆) is a middle C6, and a distance between the middle C5 and the middle C6 in the perpendicular direction is G3, the G1, the G2, and the G3 satisfy a relationship G2 < G3 < G1,

6. The battery according to any one of claims 1 to 5, wherein
a straight line passing through the middle C1 and the middle C3 is a first straight line (L1),
a straight line passing through the middle C2 and the middle C4 is a second straight line (L2), and
the first straight line (L1) and the second straight line (L2) are inclined to the thickness direction.

7. The battery according to claim 6, wherein in the perpendicular direction, the first straight line (L1) and the second straight line (L2) do not lie on a straight line.

8. The battery according to claim 6 or 7, wherein the first straight line (L1) and the second straight line (L2) are inclined toward a same direction in the thickness direction.

9. The battery according to any one of claims 1 to 8, wherein
the tabs (22t) are in connection with the first electrode collecting unit (50) with being collected,
the first tab (22t₁) is closer to the first electrode collecting unit (50) than the third tab (22t₃),
a length of the third tab (22t₃) in a protruding direction is larger than a length of the first tab (22t₁) in the protruding direction, and
a length of the fourth tab (22t₄) in the protruding direction is smaller than a length of the second tab (22t₂) in the protruding direction.

10. The battery according to any one of claims 1 to 9, wherein
the tabs (22t) are in connection with the first electrode collecting unit (50) with being collected,
the first tab (22t₁) is closer to the first electrode collecting unit (50) than the third tab (22t₃),
at one end of the wound electrode body (20a,20b,20c) in the winding axis direction,
the base width of the third tab (22t₃) is larger than the base width of the first tab (22t₁), and
the base width of the fourth tab (22t₄) is smaller than the base width of the second tab (22t₂).

11. The battery according to any one of claims 1 to 10, wherein
each of end surfaces in pair of the wound electrode body (20a,20b,20c) has a flat portion (20f) and a pair of curved portions (20r) provided at both ends of the flat portion (20f), and a winding finish end (28) of the first electrode (22) is located near one of the curved portions (20r).

12. The battery according to any one of claims 2 to 11, wherein
the wound electrode body comprises two wound electrode bodies (20a,20b), the two wound electrode bodies (20a,20b) being arranged inside the battery case (10),
values of the G1 of the two wound electrode bodies (20a,20b) differ from each other, and/or values of the G2 of the two wound electrode bodies (20a,20b) differ from each other.

13. The battery according to claim 12, wherein the G1 of one of the two wound electrode bodies (20a) is larger than the G1 of the other wound electrode body (20b).

14. The battery according to claim 12 or 13, wherein
a difference between the G1 of the one wound electrode body (20a) and the G1 of the other wound electrode body (20b) is larger than
a difference between the G2 of the one wound electrode body (20a) and the G2 of the other wound electrode body (20b).

15. The battery according to any one of claims 12 to 14, wherein
the wound electrode body further comprises a third electrode body (20c) which is another wound electrode body, the third electrode body (20c) being arranged in the battery case (10), and
G1 of the third electrode body (20c) differs from the G1 of the one wound electrode body (20a) and the G1 of the other wound electrode body (20b), and/or
G2 of the third electrode body (20c) differs from the G2 of the one wound electrode body (20a) and the G2 of the other wound electrode body (20b).
